# EUROPÄISCHE PATENTANMELDUNG

(11) **EP 2 110 564 A1**
(43) Veröffentlichungstag der Anmeldung: **21.10.2009**
(21) Anmeldenummer: 08156722.4
(22) Anmeldetag: 22.05.2008
(51) Int. Cl.: F16B 5/06

(54) **Klammer zur Befestigung eines biegsamen Flächengebildes**

(30) Priorität: 15.04.2008 DE 102008019047
(71) Anmelder: TESA SE, 20253 Hamburg (DE)
(72) Erfinder: Striberny, Tanja, 20357 Hamburg (DE); Mussenbrock, Dirk, 22085 Hamburg (DE); Siewert, Sandro, 22455 Hamburg (DE); Grüner, Hans-Joachim, 25479 Ellerau (DE)

(57) **Zusammenfassung**

Die Erfindung betrifft eine Befestigungsklammer zur Befestigung eines Gewebes (2) an einem Gitter (1), wobei die Klammer (3) einstückig ausgebildet ist und zwei endseitige Schenkel (4, 5) sowie einen die Schenkel (4, 5) miteinander verbindenden Grundkörper (6) aufweist, wobei die Klammer (3) einen Einführbereich (7) zum Aufschieben auf den Rand des Gitters (1) aufweist, und wobei die Klammer (3) derart ausgebildet ist, dass in einem Klemmbereich (8) eine Klemmkraft als Federkraft bereitgestellt wird. Es wird vorgeschlagen, dass die Klammer (3) jedenfalls zwei eine Federkraft bereitstellende federnde Bereiche aufweist und dass sich die jeweiligen Federkräfte überlagern und so die Klemmkraft bereitstellen.

## Beschreibung

Die vorliegende Erfindung betrifft eine Klammer zur Befestigung eines biegsamen Flächengebildes an einem Gitter gemäß dem Oberbegriff von Anspruch 1.

Häufig werden Gitterroste zum Verschließen von Fenstern, Lichtschächten und weiteren Boden- oder Gebäudeöffnungen verwendet. Derartige Gitter sollen licht- und luftdruchlässig sein und gegebenenfalls auch begehbar und/oder unerwünschten Eindringversuchen standhalten. Solche Gitter sind in der Regel aus hochkant stehenden Blechen - auch als Stege bezeichnet - in schachbrettmusterartiger Anordnung gebildet. Die Materialstärke des Gitters, insbesondere die Dicke und die Höhe der Bleche sind regelmäßig so bemessen, dass das Gitter ein Begehen aushält. Die lichte Weite der Gitterzwischenräume muss relativ groß gewählt werden, oftmals im Bereich zwischen etwa 6 mm und 18 mm, um ausreichend lichtdurchlässig zu sein. Wegen dieser großen Weite stellt ein solches Gitter keinen Schutz vor Ungeziefer und Schmutz bereit. Um das Eindringen von Ungeziefer und Insekten sowie von grobem Schmutz zu verhindern, werden derartige Gitter häufig zusätzlich mit licht- und luftdurchlässigen biegsamen Flächengebilden, in der Regel engmaschigen Geweben oder Gewirken abgedeckt. Als Gewebe eignen sich beispielsweise Drahtgewebe aus Metall oder Kunststoff oder auch besondere textile Gewebe. Diese biegsamen Flächengebilde werden über das Gitter gespannt und mit Halterungen am Rand des Gitters befestigt. In dem Flächengebilde vorhandene Öffnungen sind wesentlich kleiner als die Öffnungen des Gitters, aber so zahlreich, dass dennoch eine ausreichend hohe Licht- und Luftdurchlässigkeit erreicht wird.

Aus dem Stand der Technik (DE 101 21 921 B4) ist eine Halterung zur Befestigung eines Gewebes an einem Gitter in Form einer Befestigungsklammer bekannt. Diese Klammer ist einstückig ausgebildet und weist zwei endseitige Schenkel sowie einen die Schenkel miteinander verbindenen bogenförmigen Grundbereich auf. Von dem Grundbereich ragen die beiden Schenkel - im eingebauten Zustand in der Regel nach oben - ab, bilden dann eine Engstelle und gehen weiter in einen sich kehlenartig erweiternden Einführbereich über. Die durch die Schenkel gebildete Engstelle weist eine lichte Weite auf, die im entspannten Zustand geringer ist als die Summe aus Stegdicke und Dicke des Gewebes. Der Einführbereich der Klammer ist so ausgebildet, dass er beim Aufschieben der Klammer auf den Randsteg eines Gitters zu einer selbsttätigen Spreizung der Klammer führt.

Diese Klammer ist aufgrund ihrer einfachen Form mit geringem Aufwand herstellbar. Allerdings führt die Formgebung zu der Wirkung, dass der Aufschiebewiderstand, also der Widerstand beim Aufschieben der Klammer auf ein Gitter, deutlich größer ist als der Abziehwiderstand, also der Widerstand beim Entfernen der Klammer von dem Gitter. Dies führt im Ergebnis dazu, dass zur Sicherstellung eines ausreichend hohen Abzugswiderstandes der Aufschiebewiderstand ausgesprochen hoch gewählt sein muss. Um dies zu erreichen müssen sowohl die Materialdicke der Klammer als auch die Differenz zwischen lichter Weite der Klammer und der Dickensumme aus Stegdicke und Biegematerialdicke groß gewählt werden. Das daraus resultierende schwierige Aufschieben ist nicht nur unbequem, es lässt auch die Hände weniger feinfühlig agieren und steigert die Gefahr einer unkorrekten, zum Beispiel Falten werfenden, Montage.

Der vorliegenden Erfindung liegt daher die Aufgabe zugrunde eine leicht montierbare Klammer anzugeben, die dennoch preiswert herstellbar ist und eine hohe Klemmwirkung bereitstellt.

Das zuvor beschriebene Problem wird bei einer Klammer gemäß dem Oberbegriff von Anspruch 1 durch die Merkmale des kennzeichnenden Teils von Anspruch 1 gelöst. Nebengeordnete Lösungen beschreiben die Ansprüche 4, 5 und 6. Bevorzugte Ausgestaltungen und Weiterbildungen sind Gegenstand der jeweiligen Unteransprüche.

Erfindungsgemäß wurde erkannt, dass die Übergangszone vom Grundbereich in die Engstelle, also dort, wo sich die Konstruktion vom Grundbereich her kommend schlundartig verengt, eine gewisse selbsthemmende Wirkung beim Aufschieben der Klammer auf ein Gitter bewirkt, nicht hingegen beim Abziehen der Klammer. Die Biegestelle zum Schlund hin wirkt nämlich fast wie ein Gelenk, wodurch die zur Engstelle hinweisende Rampe fast wie die Klemmkörper eines Freilaufes wirken. Diese selbsthemmende Wirkung ist ursächlich für den gegenüber dem Abzugswiderstand erhöhten Aufschiebewiderstand bei der vorbekannten Konstruktion.

Um diese Wirkung zu vermeiden, schien es zunächst sinnvoll, das Biegegelenk auszusteifen, um die unvorteilhafte Selbsthemmungswirkung zu unterbinden. Eine entsprechende Materialverdickung nur an dieser Stelle vorzunehmen oder entsprechende Versteifungsrippen dort einzuprägen, hätte aber einen erhöhten Herstellungsaufwand und damit höhere Kosten zur Folge. Eine generelle Erhöhung der Materialdicke hätte ebenfalls die Kosten erhöht, den Unterschied zwischen Aufschiebe-und Abziehwiderstand nur verringert, aber nicht aufgehoben, und vor allem eine genauere Abstimmung der lichten Weite der Engstelle der Klammer auf die Dickensumme von Steg und Drahtgewebe oder dergleichen erfordert und somit eine Anwendung derselben Klammer bei unterschiedlichen Gittertypen verhindert.

Es wurde dann eine Konstruktion gefunden, bei der die störende selbsthemmende Wirkung nicht nur unterbunden wird sondern so umkehrt, dass nunmehr der Aufschiebewiderstand geringer ist als der Abziehwiderstand. Diese Lösung ist Gegenstand des Anspruchs 1 und der bevorzugten Weiterbildungen nach den Ansprüchen 2 und 3.

Eine nebengeordnete Lösung zur Erzielung einer möglichst leicht montierbaren Klammer wird in Anspruch 4 beschrieben. Im Unterschied zum Stand der Technik wird zur Ausbildung des Einführbereiches zumindest ein Schenkel der Klemme ausgehend von dem Grundbereich nicht zunächst in eine Richtung und dann wieder in die entgegen gesetzte Richtung gebogen, sondern vielmehr in nur einer Orientierung um mehr als 180° gebogen. Insbesondere erfolgt die Biegung des jeweiligen Schenkels überhaupt nur in einer Richtung. Dabei wird der Grundbereich in der Regel dem Einführungsbereich gegenüberliegend vorgesehen sein. Der Begriff der Biegung umfasst vorliegend nicht nur einen bogenförmigen Verlauf sondern als Grenzfall der Biegung auch eine scharfkantige Abknickung der Klammer.

Gemäß einer weiteren nebengeordneten Ausgestaltung ist vorgesehen, dass die Klammer in mindestens einer ihrer beiden Hälften zur Ausbildung des Einführbereiches so gebogen ist, dass sich in Abwickelrichtung der Klammer gesehen der Einführbereich unmittelbar an den Grundbereich der Klammer anschließt, hingegen sich ein für die Abziehbarkeit relevanter Ausführbereich nur vermittels des Einführbereichs an den Grundbereich anschließt. Eine derartige Konstruktion ist nicht nur hinsichtlich der auftretenden Widerstände beim Aufschieben und Abziehen besonders vorteilhaft, sondern bietet zudem den Vorteil, dass die Konstruktion äußerst kompakt ist und dadurch im Montagefall Überstände der Klammer über das Gitter hinaus vermieden werden können. Bei dieser Ausgestaltung ist bevorzugt auch vorgesehen, dass die Engstelle in Abwickelrichtung der Klammer gesehen somit nicht, wie dies aus dem Stand der Technik bekannt ist, nach dem Einführbereich ausgebildet ist sondern vielmehr vor dem den Einführbereich bildenden Abschnitten der Klammer.

Gemäß einer weiteren nebengeordneten Ausgestaltung ist vorgesehen, dass die Klammer in mindestens einer ihrer beiden Hälften so gebogen ist, dass die im Grundbereich der Klammer außen angeordnete Seite zumindest innerhalb des Einführbereiches die innere, dem zu klemmenden Flächengebilde zugewandte Seite bildet. Diese Anordnung bietet die Möglichkeit das Klammermaterial noch vor dem Biegevorgang zur Klammer einseitig besonders zu bearbeiten, insbesondere zu beschichten, und somit eine gleichartige Oberfläche an der Außenseite sowie als Kontaktfläche zum Flächengebilde und Gitter zu erzielen. Als vorteilhafte Oberflächenausgestaltungen bieten sich insbesondere solche zur Erhöhung der Reibung, Zur Vibrationsdämpfung, als Korrosionsschutz und/oder zur thermischen Isolierung an.

In bevorzugter Ausgestaltung ist eine erfindungsgemäße Klammer derart ausgebildet, dass sie an mindestens einer Außenseite eine ebene Fläche aufweist. Bei der aus dem Stand der Technik bekannten Klammer ist der Schenkel von dem Grundbereich weg gebogen, sodass die Außenseite der Klammer keine ebene Fläche bildet. Eine derartige Anordnung ist insbesondere dann problematisch, wenn das Gitter mit nur wenig Spiel an den Rahmen, in den es eingesetzt wird, angepasst ist. Eine unebene Außenfläche macht die Montage der Klammer dann aufgrund des begrenzten Bauraums nahezu unmöglich. Sofern diese jedoch, wie vorliegend vorgesehen, eine ebene Außenfläche aufweist, ist der für die Befestigungsklammer notwendige Bauraum minimal, nämlich im Wesentlichen auf die Materialdicke der Klammer beschränkt, sodass die Klammer selbst bei sehr geringem Spiel zwischen Rahmen und Gitter noch zusätzlich montiert werden kann.

Weitere Einzelheiten, Merkmale und Aspekte der vorliegenden Erfindung werden im Folgenden anhand eines Ausführungsbeispiels näher erläutert. In der Zeichnung zeigt
**Fig. 1** eine schematische Darstellung eines Gitterrahmens mit einem mittels einer erfindungsgemäßen Befestigungsklammer befestigten Gewebe,
**Fig. 2** die Befestigungsklammer aus Fig. 1 in schematischer Darstellung,
**Fig. 3** eine alternative Ausgestaltung einer Befestigungsklammer,
**Fig. 4** eine weitere alternative Ausgestaltung einer Befestigungsklammer,
**Fig. 5** eine weitere alternative Ausgestaltung einer Befestigungsklammer,
**Fig. 6** eine weitere alternative Ausgestaltung einer Befestigungsklammer,
**Fig. 7** eine weitere alternative Ausgestaltung einer Befestigungsklammer,
**Fig. 8** in schematischer Darstellung den Biegeverlauf einer Hälfte der Klammer gemäß **Fig. 7** (Kurve b)) im Vergleich zu einer Klammer aus dem Stand der Technik (Kurve a))
**Fig. 9** eine weitere alternative Ausgestaltung einer Befestigungsklammer.

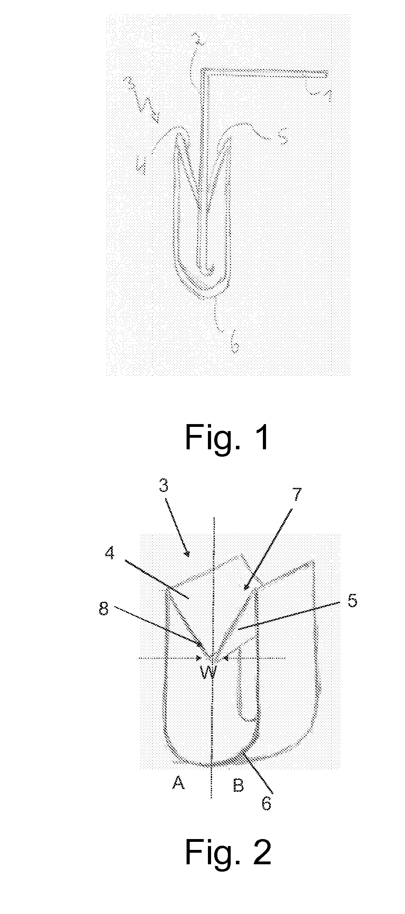

**Fig. 1** zeigt den Rand eines Gitters 1 welches zur Abdeckung eines Lichtschachts verwendet und hierzu üblicherweise in den Rahmen des Lichtschachts eingesetzt wird. Über dem Gitter 1 ist ein biegsames Flächengebilde 2 in Form eines engmaschigen Gewebes zum Schutz vor Insekten, Laub, Ungeziefer und dgl. angeordnet. Das Gewebe 2 ist an dem Gitter 1, genauer an einem seitlichen Steg des Gitters 1 mittels einer Klammer 3 befestigt. Die Klammer 3 ist einstückig aus Federstahl hergestellt. Sie weist zwei endseitige Schenkel 4, 5 sowie einen die beiden Schenkel 4, 5 miteinander verbindenden Grundbereich 6 auf.

Mittels der Klammer 3 ist das Gewebe 2 an dem Gitter 1 befestigt. Hierzu bildet die Klammer 3 eine Engstelle 8 aus, in der das Gewebe 2 und das Gitter 1 durch Klemmung festgelegt werden. Damit die notwendige Klemmwirkung erzielt werden kann, weist die Engstelle 8 der Klammer 3 vor der Montage eine lichte Weite W auf, die kleiner ist als die Summe aus der Dicke des Gitters 3, hier also der Dicke des Stegs, und der Dicke des biegsamen Flächengebildes 2.

Die Klammer 3 ist so ausgebildet, dass sie einen Einführbereich 7 zum Aufschieben der Klammer 3 auf das Gitter 1 aufweist. Der Einführbereich 7 ist rampenartig ausgebildet und ermöglicht so ein leichtes Ausrichten der Klammer 3 zum Aufschieben auf das Gitter 1. Die rampenartige Ausgestaltung des Einführbereichs 7 ermöglicht zudem eine selbsttätige Spreizung der Klammer 3 beim Aufschieben der Klammer 3 auf das Gitter 1.

Der Grundbereich 6 der Klammer 3 ist bogenförmig ausgebildet. Von seinem unteren bogenförmigen Bereich erstrecken sich an beiden Seiten gerade verlaufende Bereiche, an die sich die Schenkel 4, 5 anschließen. Die beiden Schenkel 4, 5 sind von diesen geraden Bereichen scharfkantig zurück gebogen, nämlich in den von dem Grundbereich 6 gebildeten Raum hinein. Den Winkel, den die beiden Schenkel 4, 5 dabei jeweils mit dem gerade verlaufenden Bereich des Grundbereichs einschließen beträgt etwa 50°, mit anderen Worten sind die beiden Schenkel 4, 5 jeweils um etwa 130° gegenüber dem gerade verlaufenden Bereich des Grundbereichs 6 zurück gebogen.

Die beiden Schenkel 4, 5 sind zudem aufeinander zugebogen und bilden so den Einführbereich 7 der Klammer 3. Mit ihrem beiden Enden bilden die Schenkel 4, 5 die Engstelle 8 aus. Durch die Rückbiegung entfaltet diese Anordnung der Schenkel 4, 5 in Abziehrichtung eine selbsthemmende Wirkung, erschwert also ein Lösen der Klemme 3 von dem Gitter 1. In Aufschieberichtung tritt diese selbsthemmende Wirkung jedoch nicht auf.

Diese Konstruktion, insbesondere die Rückbiegung mindestens eines der Schenkel 4, 5 führt zu dem Ergebnis, dass sich die Klammer 3 ihrem Aufschieben auf das Gitter 1 mit geringerer Reibung widersetzt als ihrem Abziehen. Vorliegend konnte ein gegenüber dem Aufschiebewiderstand um mehr als 60% erhöhter Abziehwiderstand erzielt werden.

**Fig. 2** ist zu entnehmen, dass die Klammer 3 symmetrisch ausgebildet ist. Eine derartige Ausgestaltung ist insbesondere im Hinblick auf die Möglichkeit der seitenunabhängigen Montage besonders bevorzugt. In **Fig. 2** ist ferner eine Aufteilung der Klammer 3 in eine linke Hälfte A und eine rechte Hälfte B gezeigt. Dabei wird deutlich, dass die Klammer 3 in ihren beiden Hälften A, B so gebogen ist, dass die im Grundbereich 6 der Klammer 3 außen angeordnete Seite innerhalb des Einführbereiches 7 die innere Seite bildet und dem zu klemmenden Flächengebilde 2 zugewandt ist. Eine Beschichtung dieser Seite, insbesondere mit einem reibungserhöhendem und gleichzeitig kälteisolierendem Material ist für einen guten Halt des Flächengebildes 2 und eine zudem angenehme Handhabung der Klammer 3 auch bei tiefen Temperaturen vorteilhaft.

Ferner ist **Fig. 2** zu entnehmen, dass die Klammer 3 an ihren beiden Außenseiten eben ausgebildet ist. Auch dies ist hinsichtlich einer unkomplizierten Montage bei geringem Bauraum vorteilhaft.

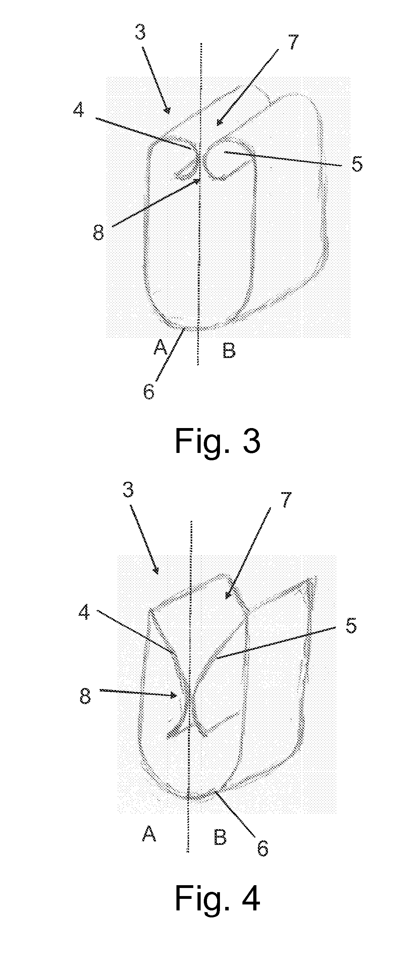

**Fig. 3** zeigt eine gegenüber **Fig. 2** abgewandelte Klammer 3. Diese Klammer 3 ist ebenfalls symmetrisch ausgebildet und weist zwei gegenüber dem Grundbereich 6 zurück gebogene Schenkel 4, 5 auf. Im Unterschied zu der Ausgestaltung gemäß **Fig. 2** sind die Schenkel 4, 5 jedoch nicht scharfkantig zurück gebogen, sondern vielmehr selbst bogenförmig ausgebildet. Die Biegung der beiden Schenkel 4, 5 erstreckt sich ausgehend von der Mitte des Grundbereichs 6 jeweils über einen Gesamtwinkel von nahezu 360°. Die Biegung der Schenkel 4, 5 erfolgt durchgehend in nur einer Orientierung, nämlich in Richtung des Inneren des Grundbereichs 6. In ihrem Verlauf bilden die Schenkel 4, 5 wiederum die Engstelle 8 aus. Dies Ausgestaltung der Klammer 3, insbesondere die Biegung der Schenkel über deutlich mehr als 180° ist im Hinblick auf ein beschädigungsfreies Lösen der Klammer 3 von dem Gitter 1 besonders vorteilhaft, da beim Lösen der Klammer 3 keine scharfen Kanten der Schenkel 4, 5 in Kontakt mit dem Flächengebilde 2 treten.

**Fig. 4** zeigt eine gegenüber **Fig. 3** geringfügig abgewandelte Klammer 3. Auch hier sind die Schenkel 4, 5 teilweise bogenförmig ausgebildet. Die Schenkel 4, 5 sind zunächst von dem Grundbereich 6 rückwärtig abgebogen, hier um etwa 160°, so dass die Schenkel 4, 5 mit dem Grundbereich 6 einen Winkel von etwa 20° einschließen. Von der Biegestelle erstrecken sich die beiden Schenkel 4, 5 zunächst in geraden Abschnitten in den durch den Grundbereich 6 gebildeten Hohlraum hinein. Im weiteren Verlauf schließt sich dann der bogenförmige Abschnitt der jeweiligen Schenkel 4, 5 an.

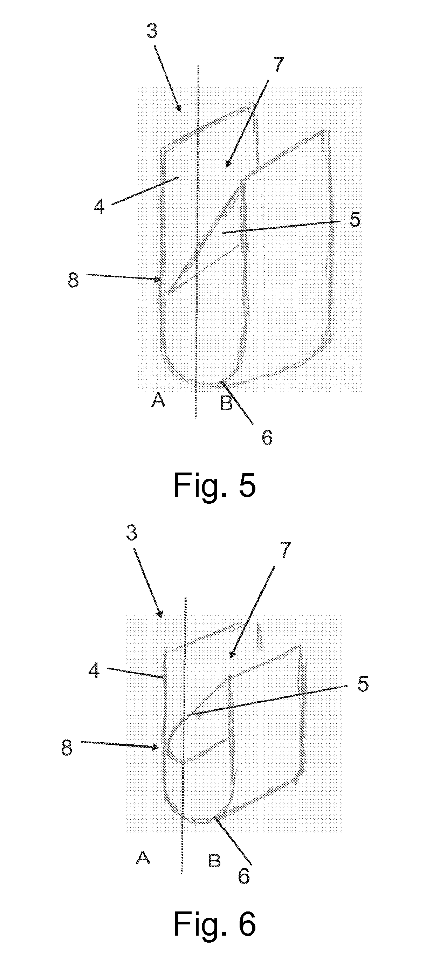

Die **Fig. 5** - **7** zeigen Ausgestaltungen einer Klammer 3, die asymmetrisch sind. Die asymmetrische Ausgestaltung der Klammer 3 ist im Hinblick auf ein möglichst einfaches Lösen der Klammer 3 von dem Gitter 1 vorteilhaft. Bei diesen Ausgestaltungen ist der Grundbereich 6 in seinem unteren Bereich wiederum bogenförmig ausgebildet. Daran schließt sich jedenfalls an einer Seite ein geradlinig verlaufender Bereich an, der eine ebene Außenfläche aufweist. Dieser geradlinige Bereich geht nahtlos in den ersten Schenkel 4 über. Der zweite Schenkel 5 hingegen ist gegenüber der Mitte des Grundbereichs 6 in seinem Verlauf um mehr als 180° in einer Orientierung umgebogen, in den gezeigten Ausführungsbeispielen jeweils nach Innen in den von dem Grundbereich 6 gebildeten Raum hinein.

**Fig. 5** zeigt eine Ausgestaltung, bei der der Schenkel 5 analog zu den Schenkeln 4, 5 der Klammer 3 gemäß **Fig. 2** ausgebildet ist. Der Schenkel 5 ist hier lediglich länger ausgeführt, sodass er sich zu dem geraden Bereich des Grundbereichs 6 hin erstreckt und dort gemeinsam mit dem Übergang von Grundbereich 6 und Schenkel 4 die Engstelle 8 bildet.

Die Klammer gemäß **Fig. 6** unterscheidet sich von der Klammer 3 gemäß **Fig. 5** lediglich darin, dass das Ende des Schenkels 5 bogenförmig ausgebildet ist. Die Bogenform dient auch hier wieder dazu beim Lösen der Klammer 3 von dem Gitter 1 Beschädigungen des Flächengebildes 2 zu vermeiden, indem möglichst keine scharfen Kanten der Schenkel 4, 5 in Kontakt mit dem Flächengebilde 2 treten können. Darüber hinaus hat die Bogenform auch eine Verringerung der Andruckkraft zur Folge, so dass die Montage der Klammer 3 erleichtert wird.

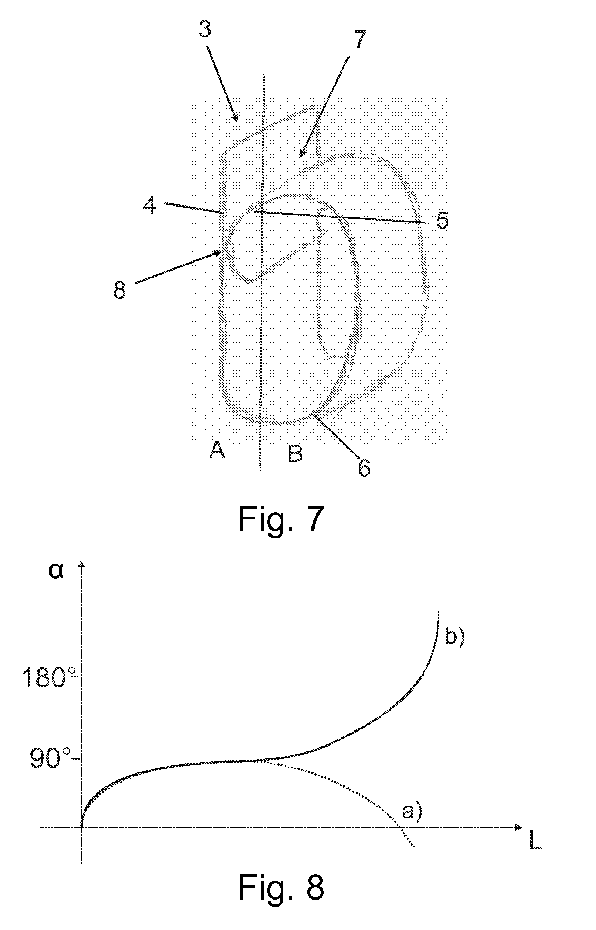

In **Fig. 7** hingegen geht der bogenförmige Bereich des Grundbereichs 6 nahtlos in den Schenkel 5 über, der wiederum bogenförmig ausgebildet ist. Die Biegung des Schenkels erfolgt dabei stetig, wie auch aus **Fig. 8** ersichtlich wird.

**Fig. 8** zeigt in schematischer Darstellung den Verlauf des Biegewinkels α des Schenkels 5 der Klammer 3 gemäß **Fig. 7** aufgetragen über seine Länge L (Kurve b)) sowie zum Vergleich den Biegewinkel α eines Schenkels einer aus dem Stand der Technik bekannten Klammer (Kurve a)). Aus dieser Darstellung wird deutlich, dass bei der Klammer 3 gemäß **Fig. 7** der Schenkel 5 über einen Winkel von mehr als 180° in einer Orientierung gebogen ist. Der Schenkel der aus dem Stand der Technik bekannten Klemme hingegen ist zunächst um etwa 90° in einer Orientierung gebogen und daran anschließend in entgegen gesetzter Orientierung. Die Rückbiegung erfolgt bei dieser bekannten Ausgestaltung um mehr als 90°. Wie bereits zuvor beschrieben wurde, kann jedoch gerade durch die relativ große Biegung in nur einer Orientierung eine besonders vorteilhafte Klemmwirkung, nämlich mit unterschiedlicher Reibung beim Aufschieben und Abziehen, erzielt werden.

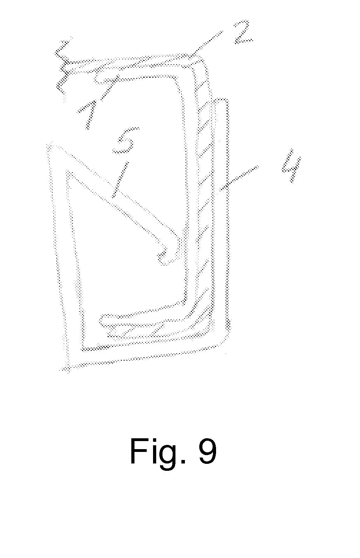

Eine weitere Klammer 3 im Montagezustand zeigt die **Fig. 9****.** Auch diese Klammer 3 ist asymmetrisch ausgebildet und weist einen Schenkel 4 auf, der unmittelbar aus dem gerade verlaufenden Abschnitt des Grundbereichs 6 übergeht. Der zweite Schenkel 5 hingegen ist gegenüber dem gerade verlaufenden Bereich des Grundbereichs 6 zurück gebogen. Die Winkel zwischen dem Schenkel 5 und dem gerade verlaufenden Bereich des Grundbereichs 6 beträgt hier bevorzugt etwa 45°. Dieser Winkel ist besonders vorteilhaft für eine einfache Montage und Demontage der Klammer 3. Aber auch andere Biegewinkel sind geeignet. Die beste Kraftverteilung wird jedoch erreicht, wenn der Biegewinkel jedenfalls größer etwa 35° und kleiner etwa 70° ist.

Durch die Asymmetrie der Klammer 3 kann vorliegend eine möglichst kompakte Bauform erzielt werden, die in weiten Teilen ein Anliegen der Klammer 3 an den Steg des Gitters 1 und so eine besonders raumsparende Montage ermöglicht. Diese raumsparende Montage wird zudem unterstützt durch die äußere rechteckige Grundform der Klammer 3. Im Vergleich zu den vorher gezeigten Klammern ist vorliegend die untere Kante des Grundbereichs 6 eben ausgebildet. Die gerade verlaufenden Bereiche sind von dieser Unterkante um etwa 90° abgewinkelt. Hierdurch kann die Klammer 3 bis zum Anschlag auf den Steg des Gitters 1 aufgeschoben werden. Selbst wenn dieser nun breiter ausgebildet ist, liegt die Klammer 3 flach auf und trägt so selbst bei einer Montage von oben nicht störend auf. Vielmehr ist die Klammer 3 in diesem Fall problemlos begehbar ohne eine Stolperstelle zu schaffen.

Weiter vorteilhaft ist das Ende des Schenkels 5 der Klammer 3 bogenförmig ausgebildet. Die Endkante weist dabei wieder von dem Flächengebilde 2 weg, kommt mit diesem also nicht in Kontakt. Diese Ausgestaltung ist nicht nur hinsichtlich der Vermeidung einer Beschädigung des Flächengebildes 2 vorteilhaft. Vielmehr hat sich auch gezeigt, dass die Dengelung des Schenkelendes auch Einfluss auf die Reibung beim Aufschieben und Abziehen der Klemme 3 hat.

Weiter ist bei der in **Fig. 9** gezeigten Klammer 3 vorgesehen, dass die äußeren Ecken der Schenkel 4,5 abgerundet sind (nicht dargestellt) und somit keine scharfen Kanten ausbilden. Dies ist insbesondere im Hinblick auf die Vermeidung einer Beschädigung des Flächengebildes 2 vorteilhaft.

Zur Beeinflussung der Reibung beim Aufschieben und Abziehen der Klammer 3 kann zusätzlich noch vorgesehen werden, dass die Frontfläche eines oder beider Schenkel 4, 5, also der Schekel an seinem vorderen Ende über seine Breite gewölbt ausgebildet ist. Durch eine derartige Wölbung ist die Kontaktfläche zum Flächengebilde 2 beeinflussbar und somit auch der auf das Flächengebilde 2 einwirkende Druck.

Bevorzugt wird die in **Fig. 9** dargestellte Klammer 3 wie folgt hergestellt: Zunächst wird ein der Größe der Klammer 3 entsprechendes Blech bereitgestellt, beispielsweise durch Ausstanzen oder Ausschneiden aus einem größeren Blech. Dieses Blech wird ggf. einseitig oder vollständig beschichtet, beispielsweise mit einer Isolationsschicht oder einer Korrosionsschutzschicht. Anschließend erfolgt das Biegen der Klammer. Die jeweilige Biegung kann dabei unter Wärmezufuhr oder auch als Kaltformung erfolgen. Bevorzugt ist eine Kaltformung.

Verfahrenstechnisch bevorzugt erfolgt zunächst die Ausbildung der Biegung am Ende des Schenkels 5. Daran schließt sich dann die Ausbildung des Schenkels 5 an, bevorzugt mit einer Biegung um einem Winkel zwischen 40° und 60°. Anschließend werden die beiden Biegungen des Grundbereichs 6 ausgebildet, vorzugsweise zunächst die Biegung in der in Fig. 9 rechten Hälfte und dann die Biegung in der linken Hälfte. Die beiden Biegestellen des Grundbereichs 6 werden bevorzugt mit einem Biegewinkel von etwa 90° ausgebildet.

Die Klemme 3 weist bevorzugt eine Materialstärke von etwa 0,3 mm bis etwa 0,6 mm auf. Aus Kostengründen sollte dabei die Materialstärke so gering wie möglich sein, zu Bereitstellung einer ausreichenden Klemmkraft und aus Festigkeitsgründen ist eine zu geringe Materialstärke jedoch problematisch. Als besonders geeignet für die oben beschrieben Anwendung hat sich ist eine Materialstärke von etwa 0, 4 mm herausgestellt.

Bei der Materialwahl der Klemme sollte neben der Festigkeit auch die Korrosionsbeständigkeit insbesondere bei Kontakt mit Metallen berücksichtigt werden. Besonders geeignet sind Federstahl und Edelstahl.

## Patentansprüche

1. Klammer zur Klemmung eines biegsamen Flächengebildes (2) an einem Gitter (1), insbesondere an einem Steg eines Gitters (1),
wobei die Klammer (3) zwei Schenkel (4, 5) sowie einen die Schenkel (4, 5) miteinander verbindenden Grundbereich (6) aufweist,
wobei die Klammer (3) eine Engstelle (8) aufweist, an der die gewünschte Reibkraft zur Erzielung der Klemmwirkung aufgebaut wird, wobei die lichte Weite (W) der Engstelle (8) kleiner ist als die Summe aus Dicke des Gitters (3) und Dicke des biegsamen Flächengebildes (2),
wobei die Klammer (3) einen Einführbereich (7) zum Aufschieben der Klammer (3) auf das Gitter (1) aufweist, wobei der Einführbereich (7) in Aufschieberichtung gesehen vor der Engstelle (8) angeordnet ist, und wobei der Einführbereich (7) derart ausgebildet ist, dass er beim Aufschieben der Klammer (3) auf ein Gitter (1) eine selbsttätige Spreizung der Klammer (3) bewirkt,
**dadurch gekennzeichnet,**
**dass** sich die Klammer (3) ihrem Aufschieben mit geringerer Reibung widersetzt als ihrem Abziehen.

2. Klammer nach Anspruch 1, **dadurch gekennzeichnet,**
**dass** der Abziehwiderstand um mindestens 60% höher ist als der Aufschiebewiderstand.

3. Klammer nach Anspruch 1 oder 2, **dadurch gekennzeichnet,**
**dass** mindestens einer der Schenkel (4; 5) an seinem Ende so gebogen ist, dass dieses Ende sich einem Abziehen mit einer selbsthemmenden Wirkung widersetzt, einem Aufschieben jedoch nicht.

4. Klammer zur Klemmung eines biegsamen Flächengebildes (2) an einem Gitter (1), insbesondere an einem Steg eines Gitters (1),
wobei die Klammer (3) zwei Schenkel (4, 5) sowie einen die Schenkel (4, 5) miteinander verbindenden Grundbereich (6) aufweist,
wobei die Klammer (3) eine Engstelle (8) aufweist, an der die gewünschte Reibkraft zur Erzielung der Klemmwirkung aufgebaut wird, wobei die lichte Weite (W) der Engstelle (8) kleiner ist als die Summe aus Dicke des Gitters (3) und Dicke des biegsamen Flächengebildes (2),
wobei die Klammer (3) einen Einführbereich (7) zum Aufschieben der Klammer (3) auf das Gitter (1) aufweist, wobei der Einführbereich (7) in Aufschieberichtung gesehen vor der Engstelle (8) angeordnet ist, und wobei der Einführbereich (7) derart ausgebildet ist, dass er beim Aufschieben der Klammer (3) auf ein Gitter (1) eine selbsttätige Spreizung der Klammer (3) bewirkt, und
wobei der Grundbereich (6) die Klammer (3) in eine linke und eine rechte Hälfte (A, B) gliedert,
insbesondere gemäß einem der vorhergehenden Ansprüche,
**dadurch gekennzeichnet,**
**dass** die Klammer (3) in mindestens einer ihrer beiden Hälften (A; B) zur Ausbildung des Einführbereichs (7) gegenüber der Mitte des Grundbereichs (6) um mehr als 180° in einer Orientierung umgebogen ist.

5. Klammer zur Klemmung eines biegsamen Flächengebildes (2) an einem Gitter (1), insbesondere an einem Steg eines Gitters (1),
wobei die Klammer (3) zwei Schenkel (4, 5) sowie einen die Schenkel (4, 5) miteinander verbindenden Grundbereich (6) aufweist,
wobei die Klammer (3) eine Engstelle (8) aufweist, an der die gewünschte Reibkraft zur Erzielung der Klemmwirkung aufgebaut wird, wobei die lichte Weite (W) der Engstelle (8) kleiner ist als die Summe aus Dicke des Gitters (3) und Dicke des biegsamen Flächengebildes (2),
wobei die Klammer (3) einen Einführbereich (7) zum Aufschieben der Klammer (3) auf das Gitter (1) aufweist, wobei der Einführbereich (7) in Aufschieberichtung gesehen vor der Engstelle (8) angeordnet ist, und wobei der Einführbereich (7) derart ausgebildet ist, dass er beim Aufschieben der Klammer (3) auf ein Gitter (1) eine selbsttätige Spreizung der Klammer (3) bewirkt, und
wobei der Grundbereich (6) die Klammer (3) in eine linke und eine rechte Hälfte (A, B) gliedert,
insbesondere gemäß einem der vorhergehenden Ansprüche,
**dadurch gekennzeichnet,**
**dass** die Klammer (3) in mindestens einer ihrer beiden Hälften (A; B) zur Ausbildung des Einführbereiches (7) so gebogen ist, dass sich in Abwickelrichtung der Klammer (3) gesehen der Einführbereich (7) unmittelbar an den Grundbereich (6) der Klammer (3) anschließt, hingegen sich ein für die Abziehbarkeit relevanter Ausführbereich (9) nur vermittels des Einführbereichs (7) an den Grundbereich (6) anschließt.

6. Klammer zur Klemmung eines biegsamen Flächengebildes (2) an einem Gitter (1), insbesondere an einem Steg eines Gitters (1),
wobei die Klammer (3) zwei Schenkel (4, 5) sowie einen die Schenkel (4, 5) miteinander verbindenden Grundbereich (6) aufweist,
wobei die Klammer (3) eine Engstelle (8) aufweist, an der die gewünschte Reibkraft zur Erzielung der Klemmwirkung aufgebaut wird, wobei die lichte Weite (W) der Engstelle (8) kleiner ist als die Summe aus Dicke des Gitters (3) und Dicke des biegsamen Flächengebildes (2),
wobei die Klammer (3) einen Einführbereich (7) zum Aufschieben der Klammer (3) auf das Gitter (1) aufweist, wobei der Einführbereich (7) in Aufschieberichtung gesehen vor der Engstelle (8) angeordnet ist, und wobei der Einführbereich (7) derart ausgebildet ist, dass er beim Aufschieben der Klammer (3) auf ein Gitter (1) eine selbsttätige Spreizung der Klammer (3) bewirkt, und
wobei der Grundbereich (6) die Klammer (3) in eine linke und eine rechte Hälfte (A, B) gliedert,
insbesondere gemäß einem der vorhergehenden Ansprüche,
**dadurch gekennzeichnet,**
**dass** die Klammer (3) in mindestens einer ihrer beiden Hälften (A; B), vorzugsweise in ihren beiden Hälften (A, B), so gebogen ist, dass die im Grundbereich (6) der Klammer (3) außen angeordnete Seite zumindest innerhalb des Einführbereiches (7) die innere, dem zu klemmenden Flächengebilde (2) zugewandte Seite bildet.

7. Klammer nach Anspruch 6, **dadurch gekennzeichnet,**
**dass** mindestens ein Schenkel (4, 5), der dem zu klemmenden Flächengebilde (2) zugewandt ist, zumindest teilweise bogenförmig ausgebildet ist, insbesondere mit einer Biegung nach Innen.

8. Klammer nach einem der vorhergehenden Ansprüche, **dadurch gekennzeichnet,**
**dass** die dem zu klemmenden Flächengebilde (2) zugewandte Seite der Klammer (3) jedenfalls im Bereich der Engstelle (8) reibungserhöhend und/oder vibrationsdämpfend ausgebildet, insbesondere beschichtet ist und/oder dass diejenige Seite, die in dem per Hand zu ergreifenden Grundbereich außen liegt kälteisolierend ausgebildet, insbesondere beschichtet ist.

9. Klammer nach einem der vorhergehenden Ansprüche, **dadurch gekennzeichnet,**
**dass** die Klammer (3) symmetrisch oder asymmetrisch ausgebildet ist.

10. Klammer nach einem der vorhergehenden Ansprüche, **dadurch gekennzeichnet,**
**dass** die Klammer (3) an mindestens einer Außenseite eben ausgebildet ist und/oder dass die Klammer (3) einstückig ausgebildet ist und/oder dass die Klammer (3) aus Federstahl hergestellt ist.

11. Klammer nach einem der vorhergehenden Ansprüche, **dadurch gekennzeichnet, dass** der Grundbereich (6) der Klammer (3) jedenfalls teilweise bogenförmig ausgebildet ist oder
dass der Grundbereich (6) der Klammer (3) im Wesentlichen eben ausgebildet ist, vorzugsweise, dass der Grundbereich (6) mindestens eine Biegestelle aufweist, in der er um etwa 90° gebogen ist.

12. Klammer nach einem der vorhergehenden Ansprüche, **dadurch gekennzeichnet,**
**dass** die Klammer (3) eine im Wesentlichen rechteckige äußere Form aufweist.

13. Klammer nach einem der vorhergehenden Ansprüche, **dadurch gekennzeichnet,**
**dass** mindestens ein Schenkel (4, 5) der Klammer (3) an seinem Ende bogenförmig ausgebildet ist.

14. Klammer nach einem der vorhergehenden Ansprüche, **dadurch gekennzeichnet,**
**dass** mindestens ein Schenkel (4, 5) der Klammer (3), insbesondere ausschließlich ein Schenkel (5), derart von dem Grundbereich (6) abgebogen ist, dass der Schenkel (5) mit einem sich im Wesentlichen gerade erstreckenden Bereich des Grundbereichs (6) einen Winkel größer 35°, insbesondere von etwa 45°, einschließt.

15. Klammer nach einem der vorhergehenden Ansprüche, **dadurch gekennzeichnet,**
**dass** die Ecken der Schenkel (4, 5) abgerundet sind.

16. Klammer nach einem der vorhergehenden Ansprüche, **dadurch gekennzeichnet,**
**dass** die Frontfläche mindestens eines Schenkels (4, 5) gewölbt ist.

17. Verwendung einer Klammer (3) gemäß einem der vorhergehenden Ansprüche zur Befestigung eines, insbesondere engmaschigen, Gewebes (2) an einem Gitter (1).
